# EUROPEAN PATENT SPECIFICATION

(11) **EP 3 545 590 B1**
(45) Date of publication and mention of the grant of the patent: **29.11.2023**
(21) Application number: 17873514.8
(22) Date of filing: 30.10.2017
(51) Int. Cl.: H01S 3/00, B29C 64/277, G02B 6/26, G02B 6/28, B22F 12/44, B22F 12/49, B33Y 30/00, B22F 10/28, B22F 10/36, B22F 12/45

(54) **LASER ENERGY MANAGING DEVICE AND METHOD, ADDITIVE MANUFACTURING SYSTEM**
VORRICHTUNG UND VERFAHREN ZUR VERWALTUNG VON LASERENERGIE, SYSTEM ZUR GENERATIVEN FERTIGUNG
DISPOSITIF ET PROCÉDÉ DE GESTION D'ÉNERGIE LASER, SYSTÈME DE FABRICATION ADDITIVE

(30) Priority: 22.11.2016 CN 201611035267
(43) Date of publication of application: 02.10.2019
(73) Proprietor: General Electric Company, Schenectady, NY 12345 (US)
(72) Inventor: YANG, Yong, Shanghai 31 201203 (CN); JIA, Ming, Shanghai 31 201203 (CN); XIE, Guangping, Shanghai 31 201203 (CN); ZHAI, Zirong, Shanghai 31 201203 (CN)
(74) Representative: Hafner & Kohl PartmbB
(86) International application number: PCT/US2017/059036
(87) International publication number: WO 2018/097934

(56) References cited:
- EP-A2- 3 037 246
- CN-A- 104 029 394
- GB-A- 2 486 460
- JP-A- 2000 033 489
- JP-A- 2002 244 078
- JP-A- 2003 039 188
- US-A- 5 596 671
- US-A1- 2010 158 458
- US-A1- 2016 114 427
- US-A1- 2016 318 129
- US-B1- 6 487 336

## Description

### FIELD

The embodiments disclosed by the present invention relate to a device and method for laser energy managing, and an additive manufacturing system.

### BACKGROUND

Management and control for laser energy is an important link in a laser additive manufacturing technology. In the existing laser additive manufacturing methods, usually one laser beam is used to process material in a "point-to-point" manner. Such a manner has a problem of slow scanning speed and low manufacturing efficiency.

In addition, the existing technology makes a projected spot of the laser beam move on a platform with material spread thereon by changing a projecting angle of the laser beam. The smaller an intersection angle between the laser beam and the platform is, the lower an energy density of the projected spot is, so the method also has a relative big restriction on sizes of objects to be manufactured.

Therefore, it is necessary to provide with a new laser energy managing device and method, and an additive manufacturing system to solve at least one of the above-mentioned problems.

Each of CN 104 029 394 A, US 2016/114427 A1 and EP 3 037 246 A2 discloses an additive manufacturing system in which an input laser beam is split by a beam splitter so as to produce a plurality of split processing beams.

### SUMMARY

One aspect of the invention relates to a laser energy managing device as defined in claim 1. The A. laser energy managing device comprises: a laser beam splitting device, at least one micro-bending device, and a controller. The laser beam splitting device is configured to split an input laser beam from a laser generator into a plurality of split laser beams, and comprises a plurality of split transmission channels configured to transmit the plurality of split laser beams respectively. The micro-bending device is configured to micro-bend the split transmission channels to attenuate corresponding split laser beams transmitted thereby and thus obtain a plurality of output laser beams. The controller is configured to control a micro-bending degree of each split transmission channel.

Another aspect of the invention relates to a laser energy managing method as defined in claim 9. The laser energy managing method comprises: splitting an input laser beam into a plurality of split laser beams; transmitting the plurality of split laser beams respectively with a plurality of split transmission channels; attenuating corresponding split laser beams transmitted by the plurality of split transmission channels by micro-bending the plurality of split transmission channels with at least one micro-bending device, to obtain a plurality of output laser beams; and controlling a micro-bending degree of each split transmission channel.

The invention also relates to an additive manufacturing system as defined in claim 14. The additive manufacturing system comprises: a platform, a laser generator, a laser energy managing device, and a laser head. the platform is provided with material spread thereon; the laser generator is configured to generate an input laser beam; the laser energy managing device is configured to receive the input laser beam and output a plurality of output laser beams; the laser head is configured to project the plurality of output laser beams onto the material of the platform and drive the plurality of output laser beams to reciprocate relative to the material to print a target object layer by layer. The laser energy managing device comprises: a laser beam splitting device, at least one micro-bending device, and a controller. The laser beam splitting device is configured to split the input laser beam into a plurality of split laser beams, and comprises a plurality of split transmission channels configured to transmit the plurality of split laser beams respectively; the micro-bending device is configured to micro-bend the split transmission channels to attenuate corresponding split laser beams transmitted thereby and thus obtain the plurality of output laser beams; the controller is configured to control a micro-bending degree of each split transmission channel.

### BRIEF DESCRIPTION OF THE DRAWINGS

These and other features, aspects and advantages of the present invention can be understood better in light of the following detailed description with reference to the accompanying drawings, in which the same reference signs represent the same components in the whole drawings, in which:
Fig. 1 is a schematic diagram of a laser energy managing device according to a specific embodiment of the present invention;
Fig. 2 is a schematic diagram of a laser beam splitting device according to a specific embodiment of the present invention;
Fig. 3 is a schematic diagram of a laser beam splitting device according to another specific embodiment of the present invention;
Fig. 4 is a schematic diagram of a micro-bending device according to a specific embodiment of the present invention;
Fig. 5 is a schematic diagram of a micro-bending device according to another specific embodiment of the present invention;
Fig. 6 is a schematic diagram of an additive manufacturing system according to a specific embodiment of the present invention; and
Fig. 7 is a flow chart of a laser energy managing method according to a specific embodiment of the present invention.

### DETAILED DESCRIPTION

In order to help the person skilled in the art to exactly understand the subject matters claimed by the present invention, detailed description for embodiments of the present invention will be given with reference to the accompanying drawings in the following. In the following detailed description for those embodiments, some known functions or structures will not be described in details by the Description, to avoid disclosure of the present invention to be affected by unnecessary details.

Unless defined otherwise, the technical or scientific terms used in the Claims and the Description should have meanings as commonly understood by one of ordinary skilled in the art to which the present disclosure belongs. The terms "first", "second" and the like in the Description and the Claims do not mean any sequential order, quantity or importance, but are only used for distinguishing different components. The terms "a", "an" and the like do not denote a limitation of quantity, but denote the existence of at least one. The terms "comprises", "comprising", "includes", "including" and the like mean that the element or object in front of the "comprises", "comprising", "includes" and "including" covers the elements or objects and their equivalents illustrated following the "comprises", "comprising", "includes" and "including", but do not exclude other elements or objects. The term "coupled" or "connected" or the like is not limited to being connected physically or mechanically, but may comprise electric connection, no matter directly or indirectly.

In one aspect, the embodiments of the present invention involve a laser energy managing device, which can be widely applied in laser apparatuses and can flexibly control and manage the energy of the laser.

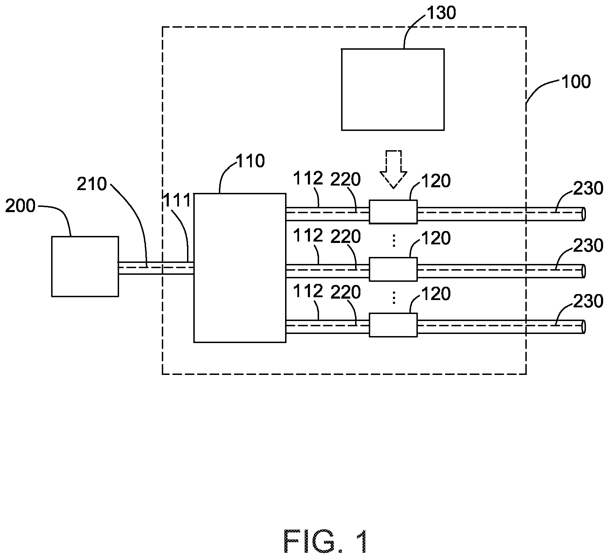

Fig. 1 is a schematic diagram of a laser energy managing device 100 according to a specific embodiment of the present invention. Referring to Fig. 1, the laser energy managing device 100 comprises a laser beam splitting device 110, at least one micro-bending device 120, and a controller 130.

The laser beam splitting device 110 is configured to split an input laser beam 210 from a laser generator 200 into a plurality of split laser beams 220. As shown in Fig. 1, the laser beam splitting device 110 comprises a splitting input channel 111 and a plurality of split transmission channels 112. The splitting input channel 111 is configured to receive the input laser beam 210 from the laser generator 200. The plurality of split transmission channels 112 are configured to transmit the plurality of split laser beams 220 respectively.

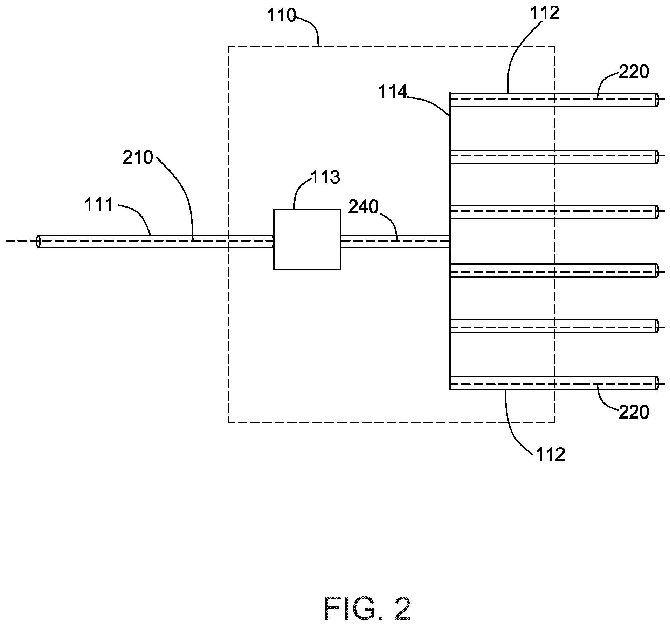

Since what is usually generated by a laser generator is a Gaussian laser beam with an energy density in a Gaussian distribution on a beam cross section, energy of the plurality of split laser beams 220 formed after the Gaussian laser beam passes through the laser beam splitting device 110 may also be different from each other, which will increase complexity of the subsequent energy controlling link. Therefore, in some embodiments, an energy averaging device may be provided to average an energy distribution of the input laser beam on the beam cross section, such that the energy of the obtained split laser beams thereafter are substantially equal, thus facilitating the controlling and adjusting of the energy of each split laser beam subsequently. As shown in Fig. 2, the laser beam splitting device 110 comprises an energy averaging device 113 and a laser beam splitter 114. The energy averaging device 113 is configured to average an energy distribution of the input laser beam 210 on its beam cross section to obtain a flat-top laser beam 240, and the laser beam splitter 114 splits the flat-top laser beam 240 into the plurality of split laser beams 220 with substantially equal energy. The "flat-top laser beam" mentioned here refers to a laser beam whose energy density is in a substantially average distribution on the beam cross section. In some embodiments, the energy averaging device 113 comprises a beam shaper, a diffraction mixer, or a combination thereof.

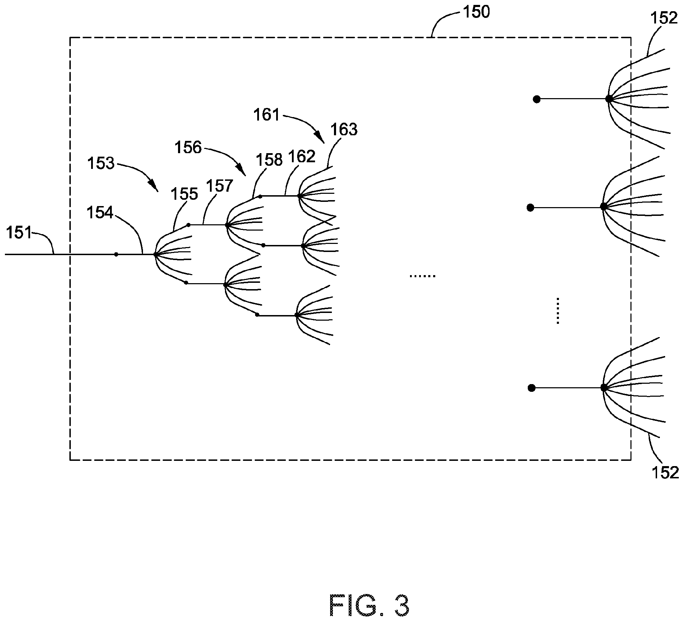

In some embodiments, as shown in Fig. 3, a laser beam splitting device 150 comprises a plurality of optical fiber couplers coupled between a splitting input channel 151 and split transmission channels 152 of the laser beam splitting device 150 and configured to distribute the energy of the input laser beam inputted from the splitting input channel 151 to a plurality of split laser beams. Specifically, the plurality of optical fiber couplers comprise a first optical fiber coupler 153 and a plurality of second optical fiber couplers 156. The first optical fiber coupler 153 comprises a first optical fiber input channel 154 in communication with the splitting input channel 151 and a plurality of first optical fiber output channels 155. Each second optical fiber coupler 156 comprises a second optical fiber input channel 157 and a plurality of second optical fiber output channels 158. The second optical fiber input channel 157 is coupled with the first optical fiber output channels 155 respectively. The number of the second optical fiber couplers 156 is greater than or equal to two, and less than or equal to the number of the first optical fiber output channels 155. The second optical fiber output channels 158 are in communication with the split transmission channels 152.

The laser beam splitting device 150 may further comprise a plurality of third optical fiber couplers 161. The number of the third optical fiber couplers 161 is greater than the number of the second optical fiber couplers and less than or equal to the total number of the second optical fiber output channels 158. A third optical fiber input channel 162 of each third optical fiber coupler is coupled with the second optical fiber output channels 158 respectively, and third optical fiber output channels 163 are in communication with the split transmission channels 152. And so forth, the laser beam splitting device 150 may further comprise a plurality of fourth optical fiber couplers, a plurality of fifth optical fiber couplers...... The number relationships and connecting manners between each stage of optical fiber couplers and its former stage of optical fiber couplers are similar to those between the third optical fiber couplers and the second optical fiber couplers, which will not be described in details again here.

Continuing to refer to Fig. 1, the micro-bending device 120 is provided on the split transmission channels 112, configured to micro-bend the split transmission channels 112, to attenuate the corresponding split laser beams 220 transmitted by the split transmission channels 112, and thus obtain a plurality of output laser beams 230. In some embodiments, the split transmission channel 112 comprises an optical fiber. The "micro-bend" mentioned here refers to a bend with a radius of curvature comparable to a cross sectional size of a split transmission channel, which can attenuate the laser energy transmitted therein, and the attenuation rate of the laser energy is related to the micro-bending degree. Therefore, by controlling the micro-bending degrees of the corresponding split transmission channels 112 micro-bent by the micro-bending device 120, the attenuation rate of the laser energy may be controlled, thus the output laser beams 230 having certain energy values may be obtained.

In the present embodiment, the above controlling function is achieved by the controller 130, i.e., the controller 130 is configured to control a micro-bending degree of each split transmission channel 112 to obtain an output laser beam 230 having a desired energy value. Specifically, the controller 130 controls the micro-bending degree of each split transmission channel according to the desired energy value of the corresponding output laser beam 230. In some embodiments, the plurality of output laser beams 230 are arranged in an array. The energy of each laser beam in the array can be controlled in real time according to the practical need.

In the embodiment as shown in Fig. 1, each split transmission channel 112 is provided with one independent micro-bending device for independently controlling the split transmission channel. In other embodiments, one micro-bending device may be used to jointly control a plurality of split transmission channels as well.

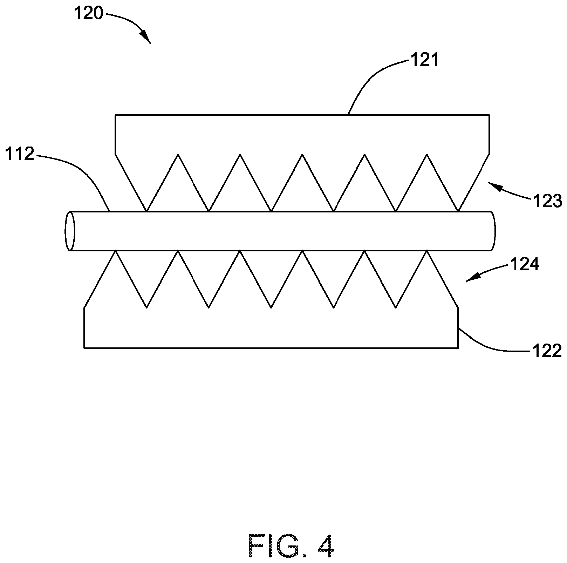

Fig. 4 is a schematic diagram of a micro-bending device 120 according to a specific embodiment of the present invention. Referring to Fig. 4, the micro-bending device 120 acts on one section of the corresponding split transmission channel 112 to micro-bend the section, which will be referred to as "micro-bent node" in the following. The micro-bending device 120 comprises a first gear rack 121 and a second gear rack 122. The first gear rack 121 comprises a plurality of first teeth 123 arranged along an axial direction of the split transmission channel. Similarly, the second gear rack 122 comprises a plurality of second teeth 124 arranged along the axial direction of the split transmission channel. The first gear rack 121 and the second gear rack 122 are provided at two sides of the split transmission channel 112 respectively, and the first teeth 123 and the second teeth 124 are opposite to each other. The first and second gear racks (i.e., the first and second teeth) are configured to squeeze the split transmission channel 112 inwards from the two sides, so as to micro-bend the split transmission channel 112. The first teeth 123 and the second teeth 124 are staggered in a direction substantially perpendicular to the axial direction of the split transmission channel 112. In other words, the tooth tips of the first teeth 123 are opposite to the gaps between tooth tips of the second teeth 124, and the tooth tips of the second teeth 124 are opposite to the gaps between the tooth tips of the first teeth 123. In this way, when the first and second gear racks 121 and 122 squeeze the split transmission channel 112 in the direction substantially perpendicular to the axial direction of the split transmission channel, the split transmission channel 112 may be micro-bent between the adjacent tooth tips of the first teeth or the second teeth. The first and second gear racks are substantially parallel with each other. The smaller the distance between the first gear rack and the second gear rack is, the larger the micro-bending degree generated thereby on the split output device is. Therefore, the controller 130 may control the micro-bending degree by controlling the distance between the first gear rack and the second gear rack.

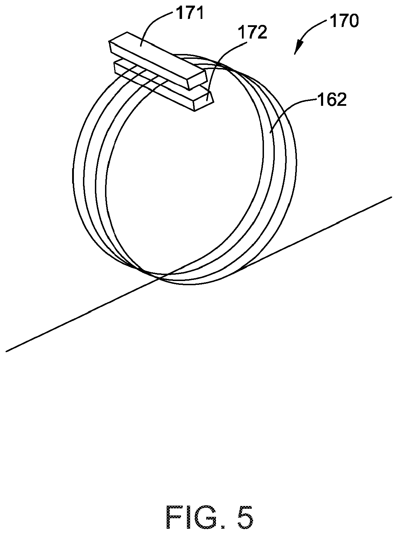

In some embodiments, each split transmission channel is provided with one micro-bent node. In other embodiments, a plurality of sections on each split transmission channel may be provided with a plurality of micro-bent nodes respectively as well. Those micro-bent nodes are in series, which can increase the attenuation rate of the laser energy. The total attenuation rate of the laser energy is a product of attenuation rates generated by all micro-bent nodes. Fig. 5 is a schematic diagram of a micro-bending device 170 according to the above embodiments. Referring to Fig. 5, the split transmission channel is winded into a spiral channel coil 162. The channel coil 162 comprises a number of channel turns that are arranged substantially parallel with each other. The micro-bending device 170 is provided on the channel coil 162 and spans at least some of the channel turns of the channel coil 162 to micro-bend a plurality of sections on the split transmission channel simultaneously. Specifically speaking, similar to the micro-bending device 120 in Fig. 4, the micro-bending device 170 comprises a first gear plate 171 and a second gear plate 172. The first gear plate 171 is positioned outside of the circumference of the channel coil 162. The second gear plate 172 is positioned inside of the circumference of the channel coil 162 and is opposite to the first gear plate 171. The first and second gear plates 171 and 172 are configured to squeeze at least some of the channel turns from the two sides of the circumference to micro-bend each squeezed channel turns. Each gear plate comprises a plurality of gear racks arranged in the circumference of the channel turns. Each gear rack has a structure similar to that of the first or second gear rack in Fig. 4, and the manner for micro-bending each turn of channel thereof is also similar to that in the embodiment as shown in Fig. 4, which will not be described in details again here.

In some embodiments, the micro-bending device comprises a vibrator (not shown), configured to micro-bend the split transmission channel at a frequency and with an amplitude.

The controller is configured to control the frequency of the vibrator, the amplitude of the vibrator, or a combination thereof. Specifically, the micro-bending degree of the split transmission channel can be controlled by controlling the amplitude of the vibrator, and the adjusting speed of the laser energy managing system on the laser energy can be controlled by controlling the vibration frequency of the vibrator. In some embodiments, the vibrator comprises piezoelectric ceramics, magnetostrictive material, or a combination thereof.

Another aspect of the present invention involves an additive manufacturing system 300 comprising the above laser energy managing device. The additive manufacturing system performs processing on the material by a controllable laser array, which may significantly increase the manufacturing efficiency.

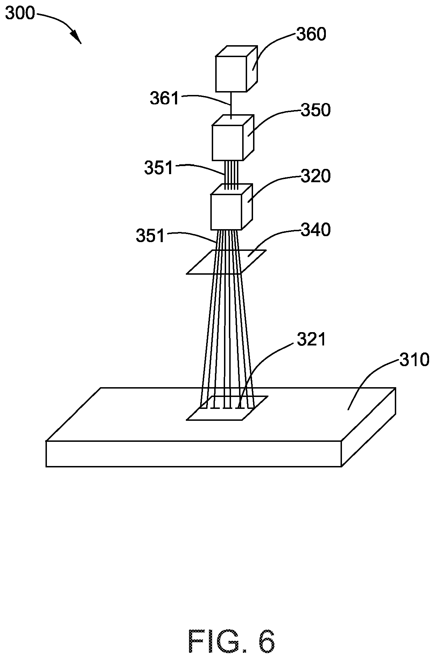

Referring to Fig. 6, the system 300 comprises a laser generator 360, a laser energy managing device 350, a laser head 320, and a platform 310. The platform 310 is provided with material spread thereon. The material may be powder metal or liquid resin or the like. The laser generator 360 is configured to generate an input laser beam 361. The laser energy managing device 350 is configured to receive the input laser beam 361, and distribute and manage the energy of the input laser beam 361 to output a plurality of output laser beams 351, each having controllable energy, i.e., output laser beams having desired energy values may be output as required. The specific structure of the laser energy managing device 350 is similar to that of the laser energy managing device 100 as shown in Fig. 1, which will not be described in details again here.

The laser head 320 is configured to project the plurality of output laser beams 351 having controllable energy onto the material of the platform 310. Each of the output laser beams forms a laser point or spot on the material. By arranging the positions of the plurality of output laser beams, the laser points or spots formed thereby on the material are made constitute a laser array 321 that may be one-dimensional or two-dimensional. The material on the platform is sintered, solidified or melted by the one-dimensional or two-dimensional laser array 321. The laser head 320 is further configured to drive the plurality of output laser beams (i.e., laser array) to reciprocate relative to the material to print a target object layer by layer. Since energy of each laser point in the laser array 321 is controllable, the laser array 321 may co-process the material within the area covered thereby at the same moment, which can significantly shorten the scanning path and thus increase the manufacturing efficiency.

For example, referring to Fig. 6, the laser array 321 is in one-dimensional linear arrangement and the width of the target object to be printed is less than or equal to the width of the laser array 321. Since the laser array 321 can co-process one row of one layer of the target object, when the row is being printed, the laser head 320 need not move to left or right along the row direction, and after the row is printed, the laser head 320 need only move to the next row along a direction perpendicular to the row. During the whole printing process of the target object, the laser head need only reciprocate along the direction substantially perpendicular to the laser array, thus significantly increasing the printing speed.

In some embodiments, the system 300 further comprises a focus lens 340 provided between the laser head 320 and the platform 310. After transmitting the focus lens 340, the plurality of output laser beams 351 are further projected onto the material of the platform to form a laser array. The focus lens 340 can focus the energy of the output laser beams, and thus enhance the heat effect on the material.

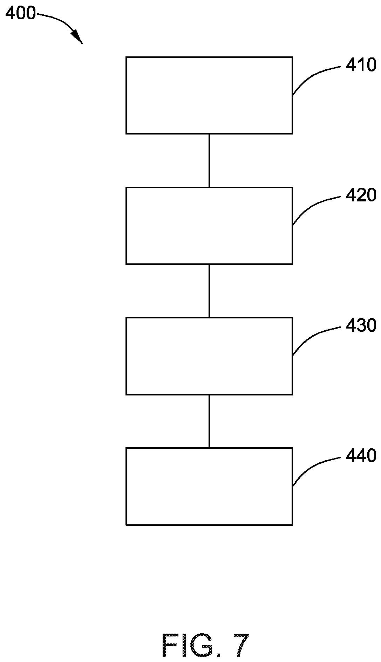

The present invention also involves a laser energy managing method, which can efficiently distribute and manage the energy of the input laser beam from the laser generator according to the practical need. Referring to Fig. 7, the laser energy managing method 400 comprises Step 410 to Step 440.

In Step 410, the input laser beam from the laser generator is split into a plurality of split laser beams. In some embodiments, Step 410 may further comprise an energy averaging step, i.e., first making the input laser beam pass through an energy averaging device to average an energy distribution of the input laser beam on the beam cross section, thus obtaining a flat-top laser beam; then splitting the flat-top laser beam into the plurality of split laser beams.

In some other embodiments, Step 410 may be implemented directly by a plurality of optical fiber couplers coupled with each other, i.e., distributing the energy of the input laser beam to the plurality of split laser beams by using the plurality of optical fiber couplers. In this way, the energy of the input laser beam may be distributed to each split laser beam substantially averagely.

In Step 420, the plurality of split laser beams are transmitted with a plurality of split transmission channels respectively. Then, in Step 430, the corresponding split laser beams transmitted by the plurality of split transmission channels are attenuated by micro-bending the plurality of split transmission channels with at least one micro-bending device to obtain a plurality of output laser beams. In some embodiments, the attenuation rate of the laser energy can be increased by micro-bending a plurality of sections on the split transmission channel simultaneously. For example, Step 430 may comprise steps of winding the split transmission channel into a channel coil, and then providing a micro-bending device on the channel coil.

The method 400 further comprises a step of controlling a micro-bending degree of each split transmission channel, as shown in Step 440. Specifically, Step 440 comprises controlling the micro-bending degree of each split transmission channel according to a desired energy value of the corresponding output laser beam so as to obtain output laser beams having the desired energy value.

Although the present invention has been set forth in details in combination with specific embodiments, the person skilled in the art shall be understood that many modifications and variations may be made to the present invention. Therefore, it should be recognized that the present invention covers all these modifications and variations as long as they fall within the scope of the present invention as defined by the claims.

## Claims

1. A laser energy managing device (100) for an additive manufacturing system, comprising:
a laser beam energy splitting device (110), configured to split an input laser beam from a laser generator into a plurality of split laser beams, and comprising a plurality of split transmission channels (112) configured to transmit the plurality of split laser beams respectively;
at least one micro-bending device (120) configured to micro-bend each of the split transmission channels to attenuate the energy of corresponding split laser beams transmitted thereby and thus obtain a plurality of output laser beams suitable for being projected on a material spread on a platform of the additive manufacturing system; and
a controller (130), configured to control a micro-bending degree of each split transmission channel.

2. The device according to claim 1, wherein the controller is configured to control the micro-bending degree of each split transmission channel according to a desired energy value of the corresponding output laser beam.

3. The device according to claim 1, wherein the laser beam splitting device comprises an energy averaging device configured to average an energy distribution of the input laser beam to obtain a flat-top laser beam, and the laser beam splitting device is configured to split the flat-top laser beam into the plurality of split laser beams.

4. The device according to claim 1, wherein the laser beam splitting device (150) comprises a plurality of optical fiber couplers (153,156,161) coupled between a splitting input channel (151) and the split transmission channels of the laser beam splitting device and configured to distribute energy of the input laser beam inputted from the splitting input channel to the plurality of split laser beams, the plurality of optical fiber couplers comprising:
a first optical fiber coupler (153) comprising a first optical fiber input channel (154) in communication with the splitting input channel and a plurality of first optical fiber output channels, and
a plurality of second optical fiber couplers, each comprising a second optical fiber input channel and a plurality of second optical fiber output channels, wherein the second optical fiber input channel is coupled with the first optical fiber output channels respectively, and the second optical fiber output channels are in communication with the split transmission channels.

5. The device according to claim 1, wherein the split transmission channel is winded into a channel coil (162), and the micro-bending device (170) is provided on the channel coil to micro-bend a plurality of sections on the split transmission channel simultaneously.

6. The device according to claim 1, wherein the micro-bending device comprises a vibrator configured to micro-bend the split transmission channel at a frequency and with an amplitude, and the controller is configured to control the frequency of the vibrator, the amplitude of the vibrator, or a combination thereof.

7. The device according to claim 1, wherein the micro-bending device comprises a first gear rack (121) and a second gear rack (122) provided at two sides of corresponding split transmission channel respectively and configured to squeeze the split transmission channel from the two sides, the controller is configured to control a distance between the first and second gear racks.

8. The device according to claim 7, wherein the first gear rack comprises a plurality of first teeth (123) arranged along an axial direction of the split transmission channel, the second gear rack comprises a plurality of second teeth (124) arranged along the axial direction of the split transmission channel, and the first and second teeth are staggered in a direction substantially perpendicular to the axial direction of the split transmission channel, and configured to squeeze the split transmission channel in the direction substantially perpendicular to the axial direction of the split transmission channel.

9. A laser energy managing method for an additive manufacturing system, comprising:
energy splitting an input laser beam into a plurality of split laser beams;
transmitting the plurality of split laser beams respectively with a plurality of split transmission channels (112);
attenuating the energy of corresponding split laser beams transmitted by the plurality of split transmission channels by micro-bending each of the plurality of split transmission channels, to obtain a plurality of respective output laser beams projected on a material spread on a platform of the additive manufacturing system; and
controlling a micro-bending degree of each split transmission channel.

10. The method according to claim 9, wherein the step of controlling comprises controlling the micro-bending degree of each split transmission channel according to a desired energy value of the corresponding output laser beam.

11. The method according to claim 9, wherein the step of splitting an input laser beam into a plurality of split laser beams comprises:
averaging an energy distribution of the input laser beam to obtain a flat-top laser beam; and
splitting the flat-top laser beam into the plurality of split laser beams.

12. The method according to claim 9, wherein the step of splitting an input laser beam into a plurality of split laser beams comprises: distributing energy of the input laser beam to the plurality of split laser beams with a plurality of optical fiber couplers (153,156,161).

13. The method according to claim 9, wherein the step of attenuating the split laser beams comprises:
winding the split transmission channel into a channel coil (162); and
providing a micro-bending device (170) on the channel coil to micro-bend a plurality of sections of the split transmission channel simultaneously.

14. An additive manufacturing system (300), comprising:
a platform (310) with material spread thereon;
a laser generator (360), configured to generate an input laser beam (361);
a laser energy managing device (350), configured to receive the input laser beam and output a plurality of output laser beams (351), and
a laser head (320), configured to project the plurality of output laser beams onto the material of the platform and drive the plurality of output laser beams to reciprocate relative to the material to print a target object layer by layer;
wherein the laser energy managing device comprises:
a laser beam energy splitting device, configured to split the input laser beam into a plurality of split laser beams, and comprising a plurality of split transmission channels configured to transmit the plurality of split laser beams respectively,
at least one micro-bending device, configured to micro-bend each of the split transmission channels to attenuate the energy of corresponding split laser beams transmitted thereby and thus obtain the plurality of output laser beams, and
a controller, configured to control a micro-bending degree of each split transmission channel.

15. The system according to claim 14, wherein the plurality of output laser beams which are projected form a one-dimensional or two-dimensional laser array (321) on the material

## Patentansprüche

1. Laserenergie-Verwaltungsvorrichtung (100) für ein additives Fertigungssystem, aufweisend:
eine Vorrichtung zum Aufteilen der Laserstrahlenergie (110), die konfiguriert ist, um einen Eingangslaserstrahl von einem Lasergenerator in eine Vielzahl von geteilten Laserstrahlen zu teilen, und eine Vielzahl von geteilten Übertragungskanälen (112) aufweist, die konfiguriert sind, um die Vielzahl von geteilten Laserstrahlen jeweils zu übertragen;
zumindest eine Mikrokrümmungsvorrichtung (120), welche derart konfiguriert ist, dass sie jeden der geteilten Übertragungskanäle mikrokrümmt, um die Energie der entsprechenden geteilten Laserstrahlen, die von ihnen übertragen werden, abzuschwächen und dadurch eine Vielzahl von Ausgangslaserstrahlen zu erhalten, die geeignet sind, auf ein Material projiziert zu werden, das auf einer Plattform des additiven Fertigungssystems verteilt ist; und
eine Steuerung (130), die konfiguriert ist, um einen Grad der Mikrokrümmung jedes geteilten Übertragungskanals zu steuern.

2. Vorrichtung nach Anspruch 1, wobei die Steuerung derart konfiguriert ist, dass sie den Grad der Mikrokrümmung jedes geteilten Übertragungskanals gemäß einem gewünschten Energiewert des entsprechenden Ausgangslaserstrahls steuert.

3. Vorrichtung nach Anspruch 1, wobei die Laserstrahlteilungsvorrichtung eine Energiemittelungsvorrichtung umfasst, die derart konfiguriert ist, dass sie eine Energieverteilung des Eingangslaserstrahls mittelt, um einen oben flachen Laserstrahl zu erhalten, und die Laserstrahlteilungsvorrichtung derart konfiguriert ist, dass sie den oben flachen Laserstrahl in die Vielzahl von geteilten Laserstrahlen teilt.

4. Vorrichtung nach Anspruch 1, wobei die Laserstrahlteilungsvorrichtung (150) eine Vielzahl von faseroptischen Kopplern (153, 156, 161) aufweist, die zwischen einem Teilungseingangskanal (151) und den geteilten Übertragungskanälen der Laserstrahlteilungsvorrichtung gekoppelt sind und derart konfiguriert sind, dass sie Energie des Eingangslaserstrahls, der von dem Teilungseingangskanal eingetragen wird, auf die Vielzahl von geteilten Laserstrahlen verteilen, wobei die Vielzahl von faseroptischen Kopplern aufweist:
einen ersten faseroptischen Koppler (153) mit einem ersten faseroptischen Eingangskanal (154), der mit dem Teilungseingangskanal in Verbindung steht, und einer Vielzahl von ersten faseroptischen Ausgangskanälen, und
eine Vielzahl von zweiten faseroptischen Kopplern, wobei jeder zweite faseroptische Koppler einen zweiten faseroptischen Eingangskanal und eine Vielzahl von zweiten faseroptischen Ausgangskanälen aufweist, wobei der zweite faseroptische Eingangskanal jeweils mit den ersten faseroptischen Ausgangskanälen gekoppelt ist und die zweiten faseroptischen Ausgangskanäle in Verbindung mit den geteilten Übertragungskanälen stehen.

5. Vorrichtung nach Anspruch 1, wobei der geteilte Übertragungskanal zu einer Kanalspule (162) gewickelt ist und die Mikrokrümmungsvorrichtung (170) auf der Kanalspule vorgesehen ist, um eine Vielzahl von Abschnitten auf dem geteilten Übertragungskanal gleichzeitig mikrozukrümmen.

6. Vorrichtung nach Anspruch 1, wobei die Mikrokrümmungsvorrichtung einen Vibrator umfasst, der derart konfiguriert ist, dass er den geteilten Übertragungskanal mit einer Frequenz und mit einer Amplitude mikrokrümmt, und die Steuerung derart konfiguriert ist, dass sie die Frequenz des Vibrators, die Amplitude des Vibrators und eine Kombination davon steuert.

7. Vorrichtung nach Anspruch 1, wobei die Mikrokrümmungsvorrichtung eine Zahnstange (121) und eine zweite Zahnstange (122) aufweist, die auf zwei Seiten des entsprechenden geteilten Übertragungskanals jeweils vorgesehen und derart konfiguriert sind, dass sie den geteilten Übertragungskanal von den beiden Seiten her einklemmen, wobei die Steuerung derart konfiguriert ist, dass sie einen Abstand zwischen der ersten und der zweiten Zahnstange steuert.

8. Vorrichtung nach Anspruch 7, wobei die erste Zahnstange eine Vielzahl von ersten Zähnen (123) umfasst, die entlang einer axialen Richtung des geteilten Übertragungskanals angeordnet sind, die zweite Zahnstange eine Vielzahl von zweiten Zähnen (124) umfasst, die entlang der axialen Richtung des geteilten Übertragungskanals angeordnet sind, und die ersten und zweiten Zähne in einer Richtung im Wesentlichen senkrecht zu der axialen Richtung des geteilten Übertragungskanals versetzt sind und derart konfiguriert sind, dass sie den geteilten Übertragungskanal in der Richtung im Wesentlichen senkrecht zu der axialen Richtung des geteilten Übertragungskanals einklemmen.

9. Laserenergie-Verwaltungsverfahren für ein additives Fertigungssystem, umfassend:
Aufteilen der Energie eines Eingangslaserstrahls in eine Vielzahl von geteilten Laserstrahlen;
Übertragen der Vielzahl von geteilten Laserstrahlen jeweils mit einer Vielzahl von geteilten Übertragungskanälen (112);
Abschwächen der Energie von entsprechenden geteilten Laserstrahlen, die durch die Vielzahl von geteilten Übertragungskanälen übertragen werden, durch Mikrokrümmen jedes geteilten Übertragungskanals der Vielzahl von geteilten Übertragungskanälen, um eine Vielzahl von jeweiligen Ausgangslaserstrahlen zu erhalten, die auf ein Material projiziert werden, das auf einer Plattform des additiven Fertigungssystems verteilt ist; und
Steuern eines Grades der Mikrokrümmung jedes geteilten Übertragungskanals.

10. Verfahren nach Anspruch 9, wobei der Schritt des Steuerns das Steuern des Mikrokrümmungsgrads jedes geteilten Übertragungskanals gemäß einem gewünschten Energiewert des entsprechenden Ausgangslaserstrahls umfasst.

11. Verfahren nach Anspruch 9, wobei der Schritt des Teilens eines Eingangslaserstrahls in eine Vielzahl von geteilten Laserstrahlen umfasst:
Mitteln einer Energieverteilung des Eingangslaserstrahls, um einen oben flachen Laserstrahl zu erhalten; und
Teilen des oben flachen Laserstrahls in die Vielzahl von geteilten Laserstrahlen.

12. Verfahren nach Anspruch 9, wobei der Schritt des Teilens eines Eingangslaserstrahls in eine Vielzahl von geteilten Laserstrahlen umfasst: Verteilen von Energie des Eingangslaserstrahls auf die Vielzahl von geteilten Laserstrahlen mit einer Vielzahl von faseroptischen Kopplern (153, 156, 161).

13. Verfahren nach Anspruch 9, wobei der Schritt des Abschwächens der geteilten Laserstrahlen umfasst:
die Wicklung des geteilten Übertragungskanals in eine Kanalspule (162); und
das Bereitstellen einer Mikrokrümmungsvorrichtung (170) an der Kanalspule, um mehrere Abschnitte des geteilten Übertragungskanals gleichzeitig mikrozukrümmen.

14. Additives Fertigungssystem (300), aufweisend:
eine Plattform (310) mit einer Materialausbreitung darauf;
einen Lasergenerator (360), der derart konfiguriert ist, dass er einen Eingangslaserstrahl (361) erzeugt;
eine Laserenergie-Verwaltungsvorrichtung (350), die derart konfiguriert ist, dass sie den Eingangslaserstrahl empfängt und eine Vielzahl von Ausgangslaserstrahlen (351) ausgibt, und
einen Laserkopf (320), der konfiguriert ist, um die Vielzahl von Ausgangslaserstrahlen auf das Material der Plattform zu projizieren und die Vielzahl von Ausgangslaserstrahlen anzutreiben, um sich relativ zu dem Material hin- und herzubewegen, um ein Zielobjekt schichtweise zu drucken;
wobei die Laserenergie-Verwaltungsvorrichtung aufweist:
eine Laserstrahlenergie-Teilungsvorrichtung, die derart konfiguriert ist, dass sie den Eingangslaserstrahl in eine Vielzahl von geteilten Laserstrahlen teilt, und die eine Vielzahl von geteilten Übertragungskanälen aufweist, die derart konfiguriert sind, dass sie die Vielzahl von geteilten Laserstrahlen jeweils übertragen;
zumindest eine Mikrokrümmungsvorrichtung, die derart konfiguriert ist, dass sie jeden geteilten Übertragungskanal der geteilten Übertragungskanäle mikrokrümmt, um die Energie der entsprechenden geteilten Laserstrahlen, die von diesen übertragen werden, abzuschwächen und dadurch die Vielzahl von Ausgangslaserstrahlen zu erhalten, und
eine Steuerung, die derart konfiguriert ist, dass sie einen Grad der Mikrokrümmung jedes geteilten Übertragungskanals steuert.

15. System nach Anspruch 14, wobei die Vielzahl von Ausgangslaserstrahlen, die projiziert werden, ein eindimensionales oder zweidimensionales Laserarray (321) auf dem Material bilden.

## Revendications

1. Dispositif de gestion d'énergie laser (100) pour un système de fabrication additive, comprenant :
un dispositif de division d'énergie de faisceau laser (110), configuré pour diviser un faisceau laser d'entrée provenant d'un générateur de laser en une pluralité de faisceaux laser divisés, et comprenant une pluralité de canaux de transmission divisés (112) configurés pour transmettre la pluralité de faisceaux laser divisés respectivement ;
au moins un dispositif de micro-courbure (120) configuré pour micro-courber chacun des canaux de transmission divisés pour atténuer l'énergie des faisceaux laser divisés correspondants transmis par ceux-ci et pour obtenir ainsi une pluralité de faisceaux laser de sortie adaptés pour être projetés sur un étalement de matériau sur une plateforme du système de fabrication additive ; et
un dispositif de commande (130), configuré pour commander un degré de micro-courbure de chaque canal de transmission divisé.

2. Dispositif selon la revendication 1, dans lequel le dispositif de commande est configuré pour commander le degré de micro-courbure de chaque canal de transmission divisé selon une valeur d'énergie souhaitée du faisceau laser de sortie correspondant.

3. Dispositif selon la revendication 1, dans lequel le dispositif de division de faisceau laser comprend un dispositif d'établissement de moyenne d'énergie configuré pour établir la moyenne d'une distribution d'énergie du faisceau laser d'entrée pour obtenir un faisceau laser supérieur plat, et le dispositif de division de faisceau laser est configuré pour diviser le faisceau laser supérieur plat en la pluralité de faisceaux laser divisés.

4. Dispositif selon la revendication 1, dans lequel le dispositif de division de faisceau laser (150) comprend une pluralité de coupleurs de fibres optiques (153, 156, 161) couplés entre un canal d'entrée de division (151) et les canaux de transmission divisés du dispositif de division de faisceau laser et configurés pour distribuer de l'énergie du faisceau laser d'entrée entré depuis le canal d'entrée de division à la pluralité de faisceaux laser divisés, la pluralité de coupleurs de fibres optiques comprenant :
un premier coupleur de fibres optiques (153) comprenant un premier canal d'entrée de fibre optique (154) en communication avec le canal d'entrée de division et une pluralité de premiers canaux de sortie de fibre optique, et
une pluralité de deuxièmes coupleurs de fibres optiques, chaque deuxième coupleur de fibres optiques comprenant un deuxième canal d'entrée de fibre optique et une pluralité de deuxièmes canaux de sortie de fibre optique, dans lequel le deuxième canal d'entrée de fibre optique est couplé aux premiers canaux de sortie de fibre optique respectivement, et les deuxièmes canaux de sortie de fibre optique sont en communication avec les canaux de transmission divisés.

5. Dispositif selon la revendication 1, dans lequel le canal de transmission divisé est enroulé en une bobine de canal (162), et le dispositif de micro-courbure (170) est fourni sur la bobine de canal pour micro-courber une pluralité de sections sur le canal de transmission divisé simultanément.

6. Dispositif selon la revendication 1, dans lequel le dispositif de micro-courbure comprend un vibrateur configuré pour micro-courber le canal de transmission divisé à une fréquence et avec une amplitude, et le dispositif de commande est configuré pour commander la fréquence du vibrateur, l'amplitude du vibrateur et une combinaison de celles-ci.

7. Dispositif selon la revendication 1, dans lequel le dispositif de micro-courbure comprend une crémaillère (121) et une deuxième crémaillère (122) fournies sur deux côtés du canal de transmission divisé correspondant respectivement et configurées pour pincer le canal de transmission divisé depuis les deux côtés, le dispositif de commande est configuré pour commander une distance entre les première et deuxième crémaillères.

8. Dispositif selon la revendication 7, dans lequel la première crémaillère comprend une pluralité de premières dents (123) disposées le long d'une direction axiale du canal de transmission divisé, la deuxième crémaillère comprend une pluralité de deuxièmes dents (124) disposées le long de la direction axiale du canal de transmission divisé, et les premières et deuxièmes dents sont en quinconce dans une direction sensiblement perpendiculaire à la direction axiale du canal de transmission divisé, et sont configurées pour pincer le canal de transmission divisé dans la direction sensiblement perpendiculaire à la direction axiale du canal de transmission divisé.

9. Procédé de gestion d'énergie laser pour un système de fabrication additive comprenant :
la division d'énergie d'un faisceau laser d'entrée en une pluralité de faisceaux laser divisés ;
la transmission de la pluralité de faisceaux laser divisés respectivement avec une pluralité de canaux de transmission divisés (112) ;
l'atténuation de l'énergie de faisceaux laser divisés correspondants transmis par la pluralité de canaux de transmission divisés en micro-courbant chaque canal de transmission divisé de la pluralité de canaux de transmission divisés pour obtenir une pluralité de faisceaux laser de sortie respectifs projetés sur un étalement de matériau sur une plateforme du système de fabrication additive ; et
la commande d'un degré de micro-courbure de chaque canal de transmission divisé.

10. Procédé selon la revendication 9, dans lequel l'étape de commande comprend la commande du degré de micro-courbure de chaque canal de transmission divisé selon une valeur d'énergie souhaitée du faisceau laser de sortie correspondant.

11. Procédé selon la revendication 9, dans lequel l'étape de division d'un faisceau laser d'entrée en une pluralité de faisceaux laser divisés comprend :
l'établissement de moyenne d'une distribution d'énergie du faisceau laser d'entrée pour obtenir un faisceau laser supérieur plat ; et
la division du faisceau laser supérieur plat en la pluralité de faisceaux laser divisés.

12. Procédé selon la revendication 9, dans lequel l'étape de division d'un faisceau laser d'entrée en une pluralité de faisceaux laser divisés comprend : la distribution d'énergie du faisceau laser d'entrée à la pluralité de faisceaux laser divisés avec une pluralité de coupleurs de fibres optiques (153, 156, 161).

13. Procédé selon la revendication 9, dans lequel l'étape de l'atténuation des faisceaux laser divisés comprend :
l'enroulement du canal de transmission divisé en une bobine de canal (162) ; et
la fourniture d'un dispositif de micro-courbure (170) sur la bobine de canal pour micro-courber une pluralité de sections du canal de transmission divisé simultanément.

14. Système de fabrication additive (300) comprenant :
une plateforme (310) avec un étalement de matériau sur celle-ci ;
un générateur de laser (360) configuré pour générer un faisceau laser d'entrée (361) ;
un dispositif de gestion d'énergie laser (350) configuré pour recevoir le faisceau laser d'entrée et pour délivrer en sortie une pluralité de faisceaux laser de sortie (351), et
une tête laser (320) configurée pour projeter la pluralité de faisceaux laser de sortie sur le matériau de la plateforme et pour entraîner la pluralité de faisceaux laser de sortie pour effectuer un mouvement de va-et-vient par rapport au matériau pour imprimer un objet cible couche par couche ;
dans lequel le dispositif de gestion d'énergie laser comprend :
un dispositif de division d'énergie de faisceau laser configuré pour diviser le faisceau laser d'entrée en une pluralité de faisceaux laser divisés, et comprenant une pluralité de canaux de transmission divisés configurés pour transmettre la pluralité de faisceaux laser divisés respectivement ;
au moins un dispositif de micro-courbure configuré pour micro-courber caque canal de transmission divisé des canaux de transmission divisés pour atténuer l'énergie des faisceaux laser divisés correspondants transmis par ceux-ci et obtenir ainsi la pluralité de faisceaux laser de sortie, et
un dispositif de commande configuré pour commander un degré de micro-courbure de chaque canal de transmission divisé.

15. Système selon la revendication 14, dans lequel la pluralité de faisceaux laser de sortie qui sont projetés forment un réseau laser (321) unidimensionnel ou bidimensionnel sur le matériau.
